# EUROPEAN PATENT APPLICATION

(11) **EP 1 770 458 A2**
(43) Date of publication of application: **04.04.2007**
(21) Application number: 06019884.3
(22) Date of filing: 22.09.2006
(51) Int. Cl.: G05B 19/05

(54) **Industrial control device configuration and discovery**

(30) Priority: 29.09.2005 US 238605
(71) Applicant: Rockwell Automation Technologies, Inc., Mayfield Heights, OH 44124 (US)
(72) Inventor: Callaghan, David M., NE,Kirkland, Washington 98033 (US); Yoke, Michael D., Mentor, Ohio 44060 (US)
(74) Representative: Jung HML

(57) **Abstract**

The subject disclosure pertains to the communications configuration of programmable logic controller modules in an industrial automation environment. Systems and methods are provided that automatically enables a programmable logic controller module to operate on a communications network once communicatively coupled thereto. Other control modules, a personal computer, or the like can access and/or otherwise interact with a module as soon as it coupled to a network. Accordingly, manual module configuration is not required prior to access and interaction in an industrial control system.

## Description

### TECHNICAL FIELD

The subject invention relates generally to industrial automation systems and more particularly toward automatic configuration of industrial control modules on a communications network.

### BACKGROUND

Industrial control systems have enabled modem factories to become partially or completely automated in many circumstances. These systems generally include a plurality of input and output (I/O) modules that interface at a device level to switches, contactors, relays and solenoids along with analog control to provide more complex functions such as proportional, integral and derivative (PID) control. Communications have also been integrated within the systems, whereby many industrial controllers can communicate *via* network technologies such as Ethernet, ControlNet, DeviceNet or other network protocols and also communicate to higher level computing systems. Generally, industrial controllers utilize the aforementioned technologies along with other technology to control, cooperate and communicate across multiple and diverse applications.

At the core of the industrial control system, is a logic processor such as a programmable logic controller (PLC). Programmable logic controllers are programmed by systems designers to operate manufacturing processes *via* user-designed logic programs or user programs. The user programs are stored in memory and generally executed by the PLC in a sequential manner although instruction jumping, looping and interrupt routines, for example, are also common. Associated with the user program are a plurality of memory elements or variables that provide dynamics to PLC operations and programs. These variables can be user-defined and can be defined as bits, bytes, words, integers, floating point numbers, timers, counters and/or other data types to name but a few examples.

Programmable logic controllers can be comprised of a rack system containing several PLC modules. The rack system allows new modules to be added and existing modules to be switched or moved quickly and efficiently. Each PLC module is responsible for a portion of the overall operation of the PLC. The individual modules are accessed and managed by the user programs created by the system designers. In order to access the modules, the user program needs a way to communicate with the modules. To this end, each new module needs to be configured before the user programs can interact with the new modules.

### SUMMARY

The following presents a simplified summary in order to provide a basic understanding of some aspects of the claimed subject matter. This summary is not an extensive overview. It is not intended to identify key/critical elements or to delineate the scope of the claimed subject matter. Its sole purpose is to present some concepts in a simplified form as a prelude to the more detailed description that is presented later.

Briefly described, the provided subject matter concerns industrial automation systems and the configuration of programmable logic controller modules. This can be achieved, among other things, by enabling the modules to automatically configure themselves to be operable on a communications network. For instance, modules can self-assign a network address that is operable and accessible on the communications network including but not limited to a PLC backplane.

According to one aspect of the subject invention, the programmable logic controller module(s) announce their new presence on a network. All other devices communicatively coupled to the network receive the announcements. These other devices learn the addresses of the new module(s) and can request additional information regarding the functions and capabilities of the new module(s).

In another aspect of the subject invention, a control device on the communications network can iterate or search the network to discover new modules. When a new module is found by the search or iteration, the control device can prompt the module for additional information. The module can respond by transmitting a description including, among other things, its type and purpose.

To the accomplishment of the foregoing and related ends, certain illustrative aspects of the claimed subject matter are described herein in connection with the following description and the annexed drawings. These aspects are indicative of various ways in which the subject matter may be practiced, all of which are intended to be within the scope of the claimed subject matter. Other advantages and novel features may become apparent from the following detailed description when considered in conjunction with the drawings.

### BRIEF DESCRIPTION OF THE DRAWINGS

Fig. 1 is a block diagram of an automatic configuring industrial controller module in accordance with an aspect of the subject invention.

Fig. 2 is a block diagram of an industrial controller module according to an aspect of the subject invention.

Fig. 3 is a block diagram of an industrial automation system that facilitates module configuration according to one aspect of the subject invention.

Fig. 4 is a block diagram of an industrial controller communication system that enables automatic module configuration according to an aspect of the subject invention.

Fig. 5 is a block diagram of an industrial controller system that facilitates automatic module configuration in accordance with one aspect of the subject invention.

Fig. 6 is a block diagram of an industrial automation system that enables simple modular expansion in accordance with an aspect of the subject invention.

Fig. 7 is a block diagram of an industrial controller communication system in accordance with an aspect of the subject invention.

Fig. 8 is a flow diagram of a configuration methodology that enables automatic module configuration according to one aspect of the subject invention.

Fig. 9 is a flow diagram of a discovery methodology that enables discovery of modules in accordance with an aspect of the subject invention.

Fig. 10 is a flow diagram of a discovery methodology according to an aspect of the subject invention.

Fig. 11 is a flow diagram of an industrial control system communication methodology in accordance with an aspect the subject invention.

Fig. 12 is a schematic block diagram illustrating a suitable operating environment.

### DETAILED DESCRIPTION

The various aspects of the subject invention are now described with reference to the annexed drawings, wherein like numerals refer to like or corresponding elements throughout. It should be understood, however, that the drawings and detailed description relating thereto are not intended to limit the claimed subject matter to the particular form disclosed. Rather, the intention is to cover all modifications, equivalents, and alternatives falling within the spirit and scope of the claimed subject matter.

As used herein, the terms "component," "system" and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on computer and the computer can be a component. One or more components may reside within a process and/or thread of execution and a component may be localized on one computer and/or distributed between two or more computers.

The word "exemplary" is used herein to mean serving as an example, instance, or illustration. Any aspect or design described herein as "exemplary" is not necessarily to be construed as preferred or advantageous over other aspects or designs.

Furthermore, the disclosed subject matter may be implemented as a system, method, apparatus, or article of manufacture using standard programming and/or engineering techniques to produce software, firmware, hardware, or any combination thereof to control a computer or processor based device to implement aspects detailed herein. The term "article of manufacture" (or alternatively, "computer program product") as used herein is intended to encompass a computer program accessible from any computer-readable device, carrier, or media. For example, computer readable media can include but are not limited to magnetic storage devices (*e.g.*, hard disk, floppy disk, magnetic strips...), optical disks (*e.g.*, compact disk (CD), digital versatile disk (DVD)...), smart cards, and flash memory devices (*e.g.*, card, stick). Additionally it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without departing from the scope or spirit of the claimed subject matter.

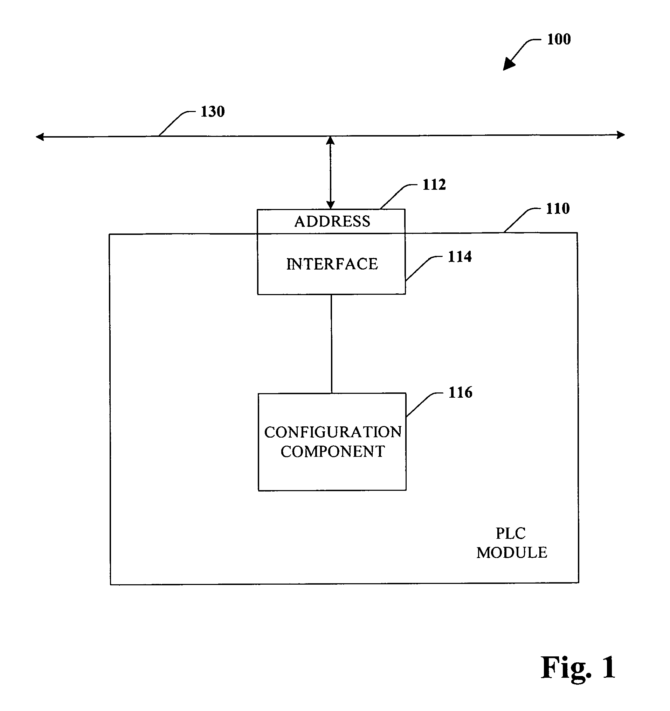

Referring initially to Fig. 1, a simple industrial automation system 100 is illustrated that depicts module configuration according to one aspect of the subject invention. More specifically, industrial automation system 100 facilitates module communication by allowing modules to configure themselves on a communications network. System 100 includes a programmable logic controller module(s) 110. Module 110 is communicatively coupled to a network 130 *via* a network interface component 114. Network 130 can be any type of communications network (*e.g.* wired, wireless, satellite...) utilizing any type of communications protocol (*e.g.* TCP/IP, CIP...). It is also to be appreciated that network 130 can be the backplane of a PLC rack or a virtual (software based) backplane within a computer. Address 112 is the address on network 130 whereby module 110 can be accessed. Address 112 can be TCP/IP addresses such as Internet Protocol version 4 (IPv4) addresses, Internet Protocol version 6 (IPv6) or the like.

Configuration component 116, associated with module 110, automatically configures module 110 to be operable on network 130. For example, address 112, operable on network 130, can be self-assigned by configuration component 116 when module 110 is communicatively coupled to network 130. For instance, configuration component 116 can self-assign module 110 an IPv4 address, such as a link-local address 169.254.100.3, if network 130 is a TCP/IP network utilizing IPv4 addresses, an object identifier (OID), or the like. Address 112 is chosen to be unique on network 130 to avoid any conflicts from duplicate addresses. Further, configuration component 116 can inform any interested devices on network 130 of the existence of module 110. For example, configuration component 116 can make an announcement on network 130 introducing module 110 and providing address 112. This can be accomplished, for instance, by sending a message to a special broadcast address on network 130 such as the broadcast address common on TCP/IP networks. After configuration component 116 assigns address 112 and announces the presence of module 110, any other device on network 130 can subsequently access and communicate with module 110. Address 112 may be modified by the device 110 based upon information retrieved from an external entity communicatively coupled to network 130 as well as the device assuming more than one IP address. For example device 110 may self assign a link local address in order to query resources for or announce its global address. Furthermore, device 110 may operate with a multitude of IP addresses. Some link local, site local, and global.

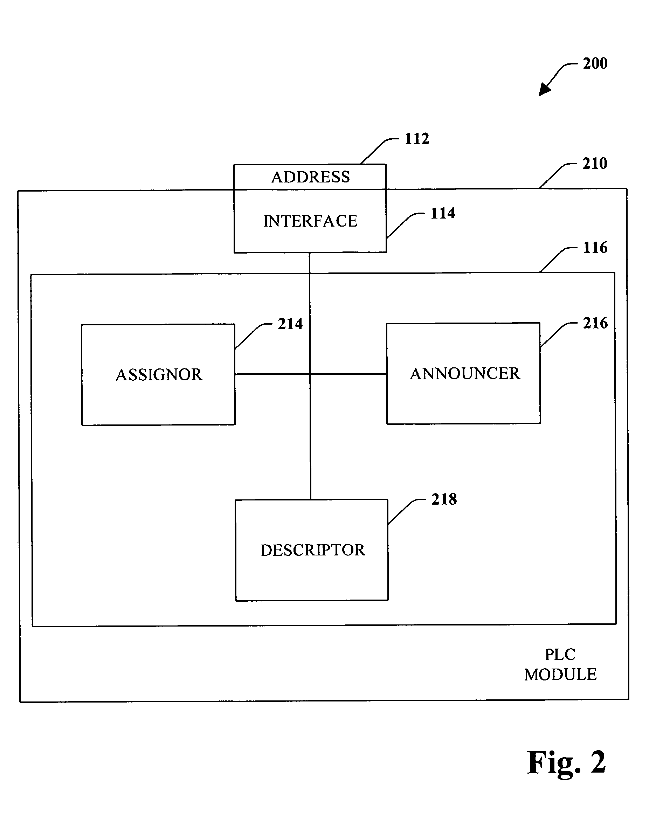

Fig. 2 illustrates system 200 that depicts a programmable logic controller module 210 in accordance with an aspect of the subject invention. Module 210 can be any type of PLC module (*e.g.* program, I/O, processor, network...). Module 210 includes a communications interface 114, an assignor component 214, an announcer component 216, and a descriptor component 218, for example, which are sub-components of configuration component 116 (Fig. 1).

Communications interface component 114 can be any type of interface according to the manner in which module 210 is employed. For example, if module 210 is communicatively coupled to the backplane of a PLC, then interface 114 can be a backplane interface. It is to be appreciated that module 210 can be employed on a communications network, such as a TCP/IP network. In such a situation, interface 114 can be any type of TCP/IP interface (*e.g.* Ethernet, IEEE 802.11b...).

When module 210 is communicatively coupled to a communication system *via* interface 114, assignor 214 is responsible for self-assigning an address 112, in the manner described with reference to Fig. 1, that is operable on the communication system or network module 210 is to be employed. For example, address 112 can be TCP/IP addresses such as IPv4 or IPv6 addresses operable on a TCP/IP network. Address 112 can also be a CIP address that is operable on an Ethernet, ControlNet, or DeviceNet network or the backplane of a PLC rack or virtual backplane of a computer. After assignor 214 assigns address 112, the new address 112 can be announced on the communication system coupled to interface 114. The announcer component 216 broadcasts the new presence of 210 through interface 114. This can be accomplished, for example, by sending a message *via* interface 114 utilizing a special broadcast address that all devices on the communication system will receive.

After announcing its presence, module 210 may receive a request for additional information. The request will be received by module 210 *via* interface 114 and the descriptor component 218 will respond to the request. Descriptor 218 will transmit to the requestor the type of module and a description of the functions and capabilities and/or the like of module 210. For example, descriptor 218 can respond that module 210 is an I/O module that is coupled to a gas valve and pressure sensor. Descriptor 218 can receive the request for additional information and respond accordingly using a plurality of protocols, for example, DNS Service Discovery, Simple Service Discovery Protocol, Service Location Protocol, or the like.

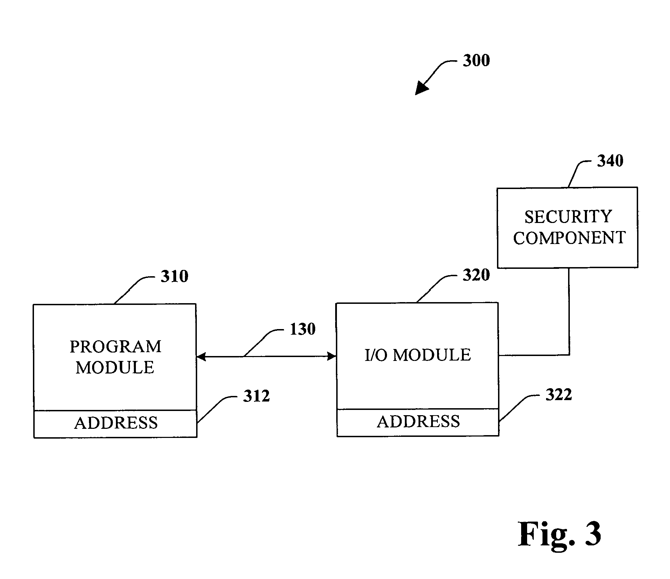

Referring now to Fig. 3, a simplified industrial automation system 300 is illustrated that facilitates module configuration according to one aspect of the subject invention. More specifically, industrial automation system 300 facilitates module communication by allowing modules to configure themselves on a communications network. System 300 includes a program module 310 and an input/output (I/O) module 320 communicatively coupled to a communications network 130. It is to be appreciated that network 130 can be any type of communications network (*e.g.* wired, wireless, satellite...) utilizing any type of protocol (*e.g.* TCP/IP, CIP...). It is also to be appreciated that the communications network can also be the backplane of a PLC rack or virtual backplane of a computer. For purposes of simplicity, modules 310 and 320 are depicted as a program module and an I/O module respectively but it is to be appreciated that these modules can be any type of PLC module or device (*e.g.* program, I/O, processor, network...).

Associated with modules 310 and 320 are addresses 312 and 322 respectively. Addresses 312 and 322 are operable on network 130. For example, network 130 can be a TCP/IP network and addresses 312 and 322 can be TCP/IP addresses such as Internet Protocol version 4 (IPv4) addresses, Internet Protocol version 6 (IPv6) or the like. Any device on network 130 can attempt to initiate communication with module 310 or module 320 by accessing the modules at addresses 312 or 322.

Addresses 312 and 322 can be automatically assigned by program module 310 and I/O module 320 respectively. This is opposed to manually configuring modules 310 and 320 with address 312 and 322 using a host PC connected *via* a serial port or the like. Modules 310 and 320 cannot be manually assigned addresses 312 and 322 *via* network 130 because modules 310 and 320 cannot be accessed on network 130 until addresses 312 and 322 have been assigned. For example, modules 310 and 320 can self-assign IPv4 addresses, such as a link-local address 169.254.100.3, if network 130 is a TCP/IP network utilizing IPv4 addresses. Addresses 312 and 322 are chosen to be unique on network 130 to avoid any conflicts from duplicate addresses. Once addresses 312 and 322 are assigned, modules 310 and 320 can communicate on network 130.

After self-assigning addresses 312 and 322, modules 310 and 320 can announce their presence on network 130. Such an announcement allows other devices on network 130 to become aware of the addition of module 310 and 320. For example, 320 can be added to network 130 where module 310 is already present. After module 320 self-assigns address 322, it announces itself on network 130. This can be accomplished, for example, by sending a message *via* network 330 utilizing a special broadcast address that all devices on network 330 will receive. Program module 310 will receive the announcement and learn that I/O module 320 has been added onto network 130. Program module 310 can communicate with I/O module 320 using address 322 that has been announced. After assignment and announcement, communication between modules 310 and 320 can occur using any protocol (*e.g.* CIP, HTTP, FTP...).

Once module 310 becomes aware of module 320, module 310 can request additional information from module 320. For example, module 310 can request a module type (*e.g.* I/O module, program module, network module...) or a detailed description (*e.g.* I/O module coupled to a gas valve and pressure sensor) from module 320. This information can be used by module 310 to configure communications according to the requirements and capabilities of module 320. Module 310 can request information and module 320 can transmit information utilizing, for example, DNS Service Discovery, Simple Service Discovery Protocol, Service Location Protocol, or the like.

Furthermore, a general eventing scheme could be configured between program module 310 and I/O module 320. Module 320, for instance, can be monitoring the value of a gas pressure sensor in an industrial process. Program module 310 can subscribe to an event server in module 320 so that module 320 will signal module 310 whenever the pressure value changes.

Access to module 320 can be controlled through the use of a security component 340. For instance, I/O module 320 may interface with a crucial portion of an industrial system and it is desired to prevent any arbitrary device from controlling module 320 on network 330 after the announcement broadcast is sent on network 130. Security component 340 may be or implement a PIN, a cryptographic hash of a value (*e.g.* MD5, SHA1...) or the like. For example, module 310, or other such device on network 330, may be required to transmit a PIN to module 320 before control or information requests will be accepted by module 320. Another option is that module 310 can send a hashed value that changes according to a predefined algorithm along with a timestamp to module 320. Module 320 will compare the hashed value sent from module 310 to security token and verify a match. After a successful match, module 320 will accept communications from module 310. Furthermore, security component 340 can ensure that only authenticate and ensure that only particular modules or types thereof are connected to the network 130, for instance in appropriate backplane slots.

System 300 can be implemented, for example, by employing Universal Plug-n-Play (UPnP). For instance, I/O module 320 can be an UPnP device and program module 310 can be an UPnP control point. As an UPnP device, I/O module 320 has services that expose actions and maintain a state with state variables. For example, I/O module 320 can be monitoring and controlling a gas pressure sensor and a gas valve in an industrial process. I/O module 320 can have a service with a state variable for the pressure value and a variable for the valve setting. Module 320 can also expose actions to read the pressure value or to set the valve. Furthermore, module 320, as a UPnP device, can act as an event server that publishes events or changes in state to interested subscribers. As an UPnP control point, program module 310 is able to discover and control UPnP devices. Module 310 could retrieve a description of a UPnP device and its services, control the UPnP device by invoking the service actions, and subscribe to the service event server to retrieve notifications of changes. For example, module 310 can request and retrieve a description of service from I/O module 310. Module 310 can also retrieve the gas pressure value or set the valve state by invoking the service actions of module 320. Further, module 310 can subscribe the event server of module 320 and receive notifications whenever the gas pressure changes.

The configuration of I/O module 320 as an UPnP device begins with addressing module 320. Module 320 can acquire an address by utilizing Dynamic Host Configuration Protocol (DHCP) or the self-addressing approach described *supra.* After addressing, module 320 can utilize Simple Service Discovery Protocol (SSDP) to broadcast an announcement *via* HTTPMU or the like. Similarly, program module 310, as a control point, can send a SSDP search request. Module 320, upon receiving a SSDP search request, can send an SSDP response to module 310. After discovery, module 310 can request a description from module 320. Module 320 can transmit to module 310 a description of the device and services as an XML or the like. After receiving the description, module 310 can invoke the actions of the services of module 320 to control its operation. Further, module 310 can subscribe to an event of module 320 by employing General Event Notice Architecture (GENA). Module 310 can send a GENA request specifying the service to subscribe to and the location to send events. After subscription, module 320 signals changes to the service by sending a message to the subscribers at the location provided with the subscription request.

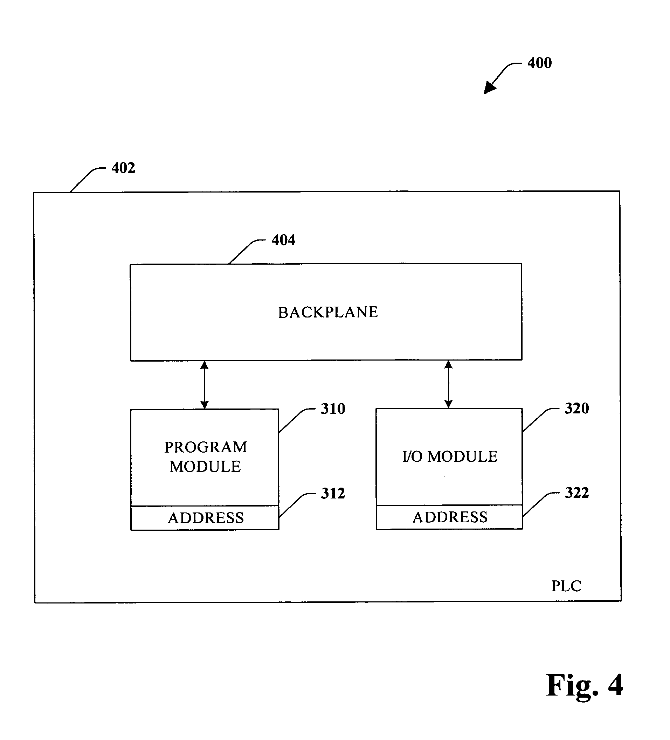

Turning now to Fig. 4, an industrial automation system 400 depicts automatic module configuration according to an aspect of the subject invention. More specifically, industrial automation system 400 facilitates module communication by allowing modules to configure themselves on a PLC backplane. System 400 includes a program module 310 and an input/output (I/O) module 320 communicatively coupled to a backplane 404 of PLC 402. It is to be appreciated that communication over backplane 404 can be any type of communication protocol (*e.g.* TCP/IP, CIP...). Modules 310 and 320 are depicted as a program module and an I/O module respectively but it is to be appreciated that these modules can be any type of PLC module (*e.g.* program, I/O, processor, network...).

Associated with modules 310 and 320 are addresses 312 and 322 respectively. Addresses 312 and 322 are operable on backplane 404. For example, backplane 404 can utilize CIP and addresses 312 and 322 can be CIP addresses. Address 312 and 322 can also be position designations that specify the location of modules 310 and 320 in the PLC rack 402. Any device in PLC 402 and communicatively coupled to backplane 404 can initiate communication with modules 310 and 320 by attempting to access the modules at addresses 312 or 322.

Program module 310 and I/O module 320 automatically assign addresses 312 and 322 respectively. Automatic assignment removes the need to manually configure the modules by assigning a unique address. For example, modules 310 and 320 can self-assign CIP addresses if backplane 404 employs CIP for communication. Addresses 312 and 322 are chosen to be unique on backplane 404 to avoid any conflicts from duplicate addresses. Modules 310 and 320 can communicate over backplane 404 as soon as addresses 312 and 322 are assigned.

After self-assigning addresses 312 and 322, modules 310 and 320 can inform other modules of their addition to PLC 402 by announcing their presence on backplane 404. For example, module 320 can be added to PLC 402 by communicatively coupling I/O module 320 to backplane 404 where module 310 is already present. Module 420 will announce itself on backplane 404 after self-assigning itself address 422. This can be accomplished, for example, by sending a message *via* backplane 404 to all other modules communicatively coupled to the backplane 404. Program module 310 will receive the announcement and learn that I/O module 320 has been added to PLC 402 and the backplane 404. Program module 410 can communicate with I/O module 420 by utilizing address 322 that has been announced. After the communication system has been configured, communication between modules 410 and 420 can occur using any protocol (*e.g.* CIP, HTTP, FTP...).

Module 320 can respond to requests for additional information from module 310 once module 310 receives the announcement from module 320. For example, module 310 can request a module type (*e.g.* I/O module, program module, network module...) or a detailed description (*e.g.* I/O module coupled to a gas valve and pressure sensor) from module 320. This information can be used by module 310 to configure communications according to the requirements and capabilities of module 320. For example, module 310 can request information and module 320 can transmit information utilizing DNS Service Discovery, Simple Service Discovery Protocol, Service Location Protocol, or the like.

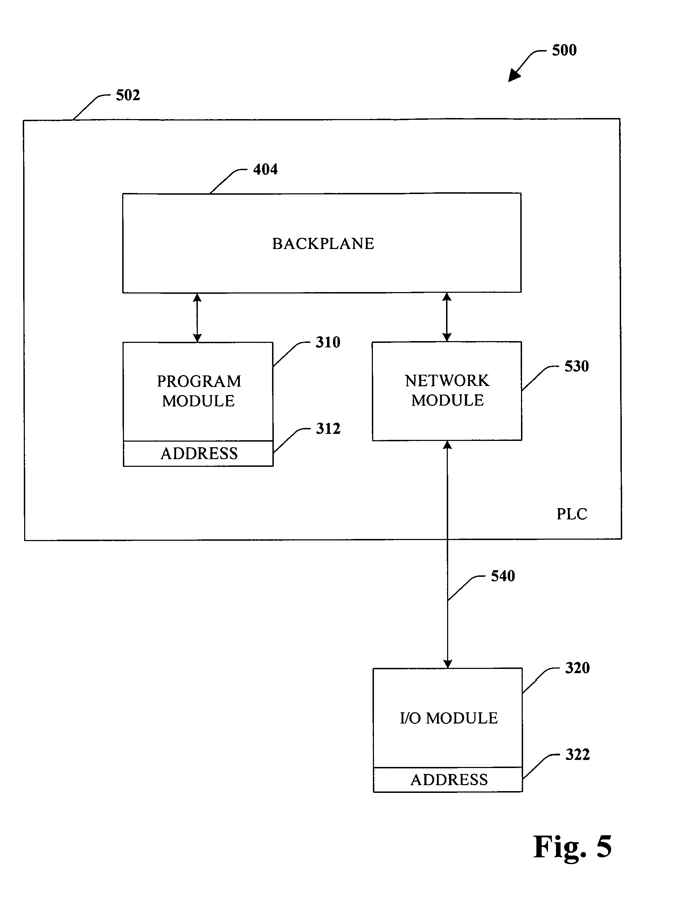

Referring now to Fig. 5, an industrial automation system 500 depicts automatic module configuration according to an aspect of the subject invention. More specifically, industrial automation system 500 facilitates module communication by allowing modules to configure themselves on a communications network. System 500 includes a programmable logic controller (PLC) 502 containing a program module 310 and a network module 530 communicatively coupled to backplane 404 of PLC 502. Network module 530 is communicatively coupled to an I/O module 520 *via* network 540. It is to be appreciated that network 540 can be any type of communications network (*e.g.* wired, wireless, satellite...) using any type of protocol (*e.g.* TCP/IP, CIP...). It is also to be appreciated that the communications network can also be the backplane of the PLC rack. Modules 310 and 320 are depicted as a program module and an I/O module respectively but it is to be appreciated that these modules can be any type of PLC module (*e.g.* program, I/O, processor, network...).

Associated with modules 310 and 320 are addresses 312 and 322 respectively. Address 312 is operable on PLC backplane 404. For example, address 312 can be a CIP address. It is to be appreciated that address 312 can also be an IPv4 or IPv6 address operable on network 540. In that situation, network module 530 will perform as a gateway device and route network traffic from network 540 to program module 310. Address 322 is operable on network 530. For instance, network 540 can be a TCP/IP network and address 322 can be an IPv4 or IPv6 address.

Addresses 312 and 322 are automatically assigned by program module 310 and I/O module 320 respectively. This is opposed to manually configuring modules 310 and 320 with address 312 and 322, for example, by using a host PC connected *via* a serial port or the like. For example, modules 310 and 320 can self-assign IPv4 addresses, such as a link-local address 169.254.100.3, if network 530 is a TCP/IP network utilizing IPv4 addresses. Addresses 312 and 322 are chosen to be unique on network 540 and/or backplane 404 to avoid any conflicts from duplicate addresses. Once addresses 312 and 322 are assigned, modules 310 and 320 can communicate on network 540.

After self-assigning addresses 312 and 322, modules 310 and 320 can announce their presence on network 540 and/or backplane 404. Such an announcement allows other devices on network 540 and backplane 404 to become aware of the addition of module 310 and 320. For example, 320 can be added to network 540 while module 310 is already present on backplane 404. After module 320 self-assigns address 322, it announces itself on network 540. This can be accomplished, for example, by sending a message *via* network 540 utilizing a special broadcast address that all devices on network 540 will receive. Network module 530 will receive the announcement from module 320 and forward onto backplane 404 to all modules communicatively coupled to backplane 404. Program module 310 will receive the forwarded announcement and learn that I/O module 320 has been added onto network 540. Program module 310 can communicate with I/O module 320 using address 322 that has been announced. Module 310 will communicate with network module 530 *via* backplane 404 using any type of protocol (*e.g.* CIP, TCP/IP). Network module 530 will route data transmitted to and from module 310 onto network 540. After assignment and announcement, communication between modules 310 and 320 can occur using any protocol (*e.g.* CIP, HTTP, FTP...).

Once module 310 becomes aware of module 320, module 310 can request additional information from module 320. For example, module 310 can request a module type (*e.g.* I/O module, program module, network module...) or a detailed description (*e.g.* I/O module coupled to a gas valve and pressure sensor) from module 320. This information can be used by module 310 to configure communications according to the requirements and capabilities of module 320. Module 310 can request information and module 520 can transmit information utilizing, for example, DNS Service Discovery, Simple Service Discovery Protocol, Service Location Protocol, or the like.

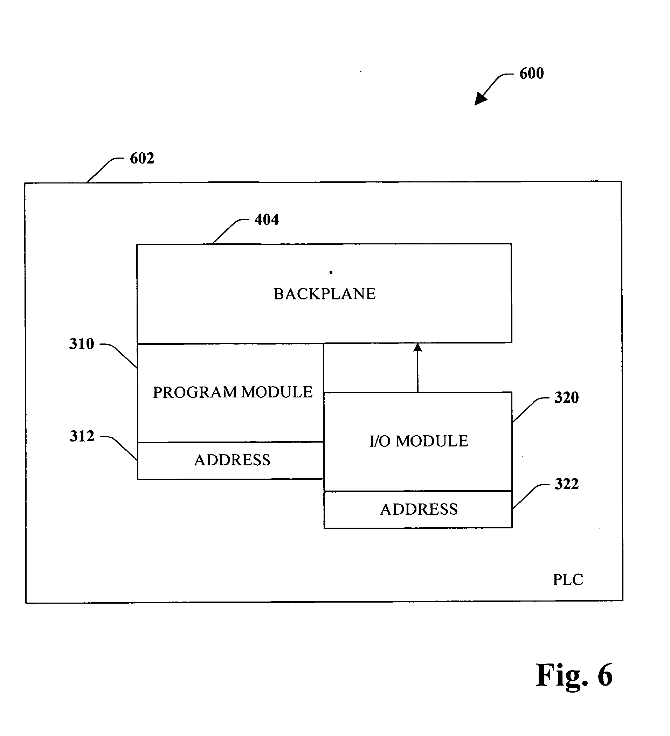

Turning briefly now to Fig. 6, system 600 depicts automatic module configuration in an industrial control system in accordance with an aspect of the subject invention. Fig. 6 depicts a programmable logic controller (PLC) 602. The PLC 602 includes a program module 310 and an I/O module 320 communicatively coupled to the PLC backplane 404. I/O module 320 is depicted as being in the process of installation into PLC 602. Specifically, module 320 is in the process of being communicatively coupled to the communications backplane 404 of PLC 602.

Upon completion of the installation, I/O module 320 will self-assign itself address 322 in the manner described in reference to Figs. 1-5. After assignment, module 320 will announce its presence on backplane 404. For example, module 320 can send a message *via* backplane 404 to all other modules communicatively coupled to the backplane 404, including program module 310. Program module 310 will receive the announcement and learn that I/O module 320 has just been added to PLC 602 and the backplane 404. Program module 310 can initiate communications with I/O module 320 by utilizing address 322 that has been announced. After the communication system has been configured, communication between modules 310 and 320 can occur using any protocol (*e.g.* CIP, HTTP, FTP...).

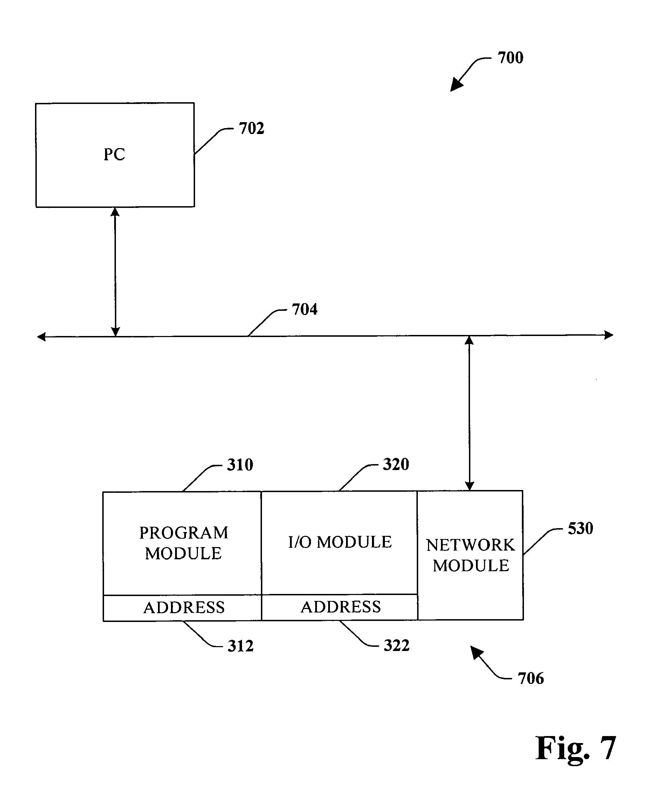

Referring now to Fig. 7, an industrial automation system 700 illustrates communication configuration according to an aspect of the subject invention. System 700 includes a personal computer or computing device 702 communicatively coupled to a network 704. It is to be appreciated that network 704 can be any type of communications network (*e.g.* wired, wireless, satellite...) using any type of protocol (*e.g.* TCP/IP, CIP...). Programmable logic controller (PLC) 706 is also communicatively coupled to network 704 through network module 530. PLC 706 includes a program module 310 and an I/O module 320. Modules 310 and 320 are depicted as a program module and an I/O module respectively but it is to be appreciated that these modules can be any type of PLC module (*e.g.* program, I/O, processor, network...). Modules 310 and 320 communicate with each other and network module 530 *via* the backplane of PLC 706. Network module 530 will route data to and from modules 310 and 320 and the network 704.

Addresses 312 and 322 are associated with modules 310 and 320 respectively. Addresses 312 and 322 are operable on network 704. For example, network 704 can be a TCP/IP network and addresses 312 and 322 can be TCP/IP addresses such as IPv4 or IPv6 addresses or any like identifiers. Any device on network 704, such as PC 702, can attempt to initiate communication with module 310 or module 320 by accessing the modules at addresses 312 or 322 respectively. Addresses 312 and 322 are automatically assigned by program module 310 and I/O module 320 respectively. This is opposed to manually configuring modules 310 and 320 with address 312 and 322 using a host PC connected *via* a serial port or the like. For example, modules 310 and 320 can self-assign IPv4 addresses, such as a link-local address 169.254.100.3, if network 704 is a TCP/IP network utilizing IPv4 addresses. Addresses 312 and 322 are chosen to be unique on network 704 to avoid any conflicts from duplicate addresses. Once addresses 312 and 322 are assigned, modules 310 and 320 can communicate on network 704.

After self-assigning addresses 312 and 322, modules 310 and 320 can announce their presence on network 704. Such an announcement allows other devices on network 704 to become aware of the addition of modules 310 and 320. For example, modules 310 and 320 can be added to PLC 706. PLC 706 is communicatively coupled to network 704 *via* network module 530. PC 702 is already present on network 704. After modules 310 and 320 self-assign addresses 312 and 322 respectively, modules 310 and 320 announce themselves on network 704. This can be accomplished, for example, by sending a message *via* network 704 utilizing a special broadcast address that all devices on network 704 will receive. The announcement will be forwarded onto network 704 by network module 530. PC 702 will receive the announcements from program module 310 and I/O module 320 and learn that modules 310 and 320 have been become accessible on network 704. PC 702 can communicate with modules 310 and 320 using addresses 312 and 322 that have been announced. After assignment and announcement, communication between PC 702 and modules 310 and 320 can occur using any protocol (*e.g.* CIP, HTTP, FTP...).

At least some of the aforementioned systems have been described with respect to interaction between several components, among other things. It should be appreciated that such systems and components can include those components or sub-components specified therein, some of the specified components or sub-components, and/or additional components. Sub-components could also be implemented as components communicatively coupled to other components rather than included within parent components. Additionally, it should be noted that one or more components may be combined into a single component providing aggregate functionality or divided into several sub-components. The components may also interact with one or more other components not specifically described herein but known by those of skill in the art.

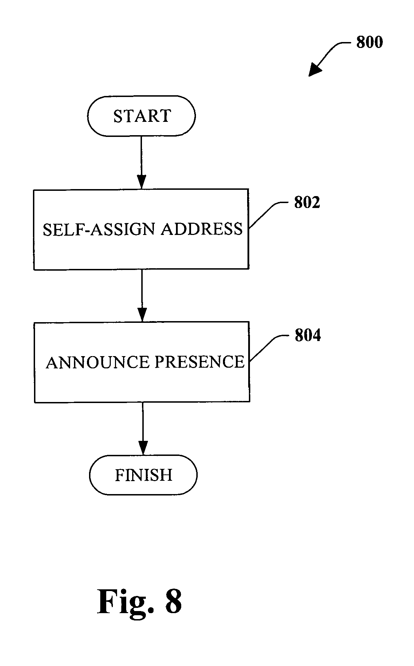

In view of the exemplary systems described *supra,* methodologies that may be implemented in accordance with the disclosed subject matter will be better appreciated with reference to the flow charts of Figs. 8-11. While for purposes of simplicity of explanation, the methodologies are shown and described as a series of blocks, it is to be understood and appreciated that the claimed subject matter is not limited by the order of the blocks, as some blocks may occur in different orders and/or concurrently with other blocks from what is depicted and described herein. Moreover, not all illustrated blocks may be required to implement the methodologies described hereinafter.

Turning now to Fig. 8, a flow diagram illustrates an automatic configuration methodology 800 in accordance to an aspect of the subject invention. Method 800 can be employed by a programmable logic controller module in an industrial control system, but is not limited to such a situation. At reference numeral 802, a network address is self-assigned. By way of example and not limitation, the address can be TCP/IP addresses such as IPv4 or IPv6 addresses operable on a TCP/IP network. At reference numeral 804, an announcement of the new self-assigned addressed is made on a network associated with the address. For instance, a message can be transmitted on a network using special broadcast address that is received by all devices on the network.

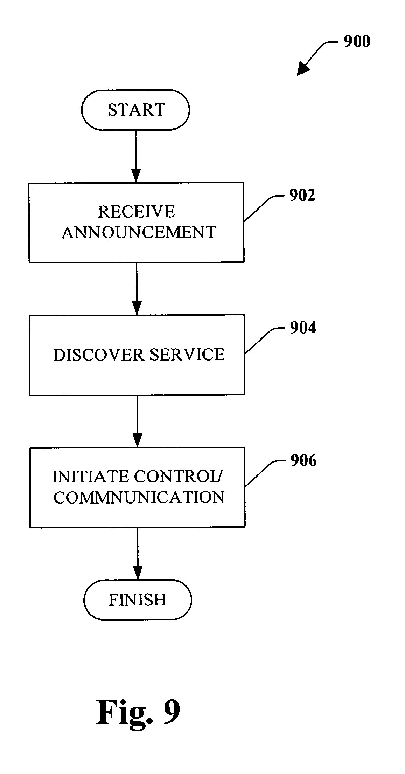

Referring now to Fig. 9, a flow diagram illustrates an automatic configuration methodology 900 according to an aspect of the subject invention. Method 900 can be employed by a programmable logic controller, a PLC module, or a personal computer, but it is to be appreciated that it is not limited to such a situation. At reference numeral 902, an announcement of a new device address is received. At 904, the new address is contacted to discover what service is provided at that address. For example, the address is contacted and it is discovered that the new device is an I/O module. At reference numeral 906, control over the new device is initiated and/or communication is established. For instance, the new I/O module is instructed to transmit input data or change output data to affect a process in the industrial control system.

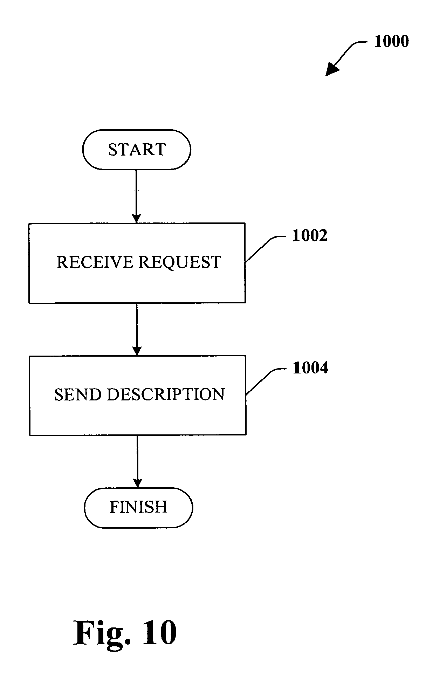

Turning now to Fig. 10, a flow diagram illustrates an automatic configuration methodology 1000 in accordance to an aspect of the subject invention. Method 1000 can be employed by a programmable logic controller module in an industrial control system, but is not limited to such a situation. At reference numeral 1002, a request for additional information is received. For instance, the request can be a request for a detailed description of functions and capabilities. At reference numeral 1004, the detailed description of functions and capabilities is transmitted to the original requestor.

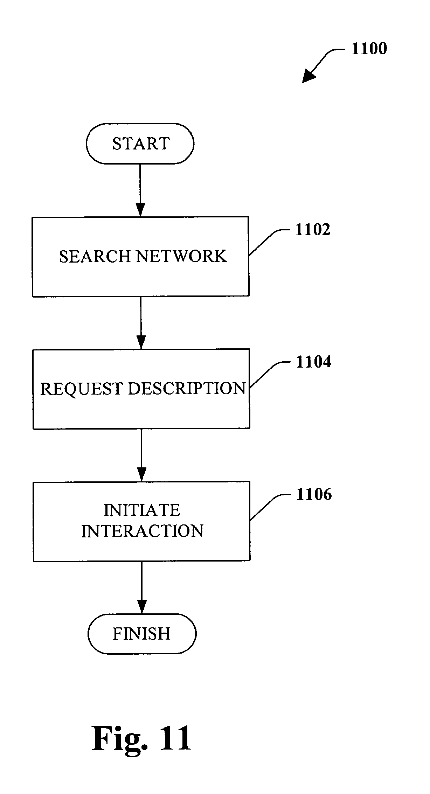

Referring now to Fig. 11, a flow diagram illustrates an automatic configuration methodology 1100 in accordance with an aspect of the subject invention. Method 1100 can be employed by a programmable logic controller, a PLC module, or a personal computer, but it is to be appreciated that it is not limited to such a situation. At reference numeral 1102, a network is searched for new devices. For instance, a PLC backplane or local area network can be iterated to detect the presence of a new device. At reference numeral 1104, a detailed description is requested from the discovered device. For example, the detailed description can include the type of services provided by the new devices and the functions and capabilities of the device. At reference numeral 1106, interaction with the new device is initiated by establishing communication according to the functions and capabilities requested.

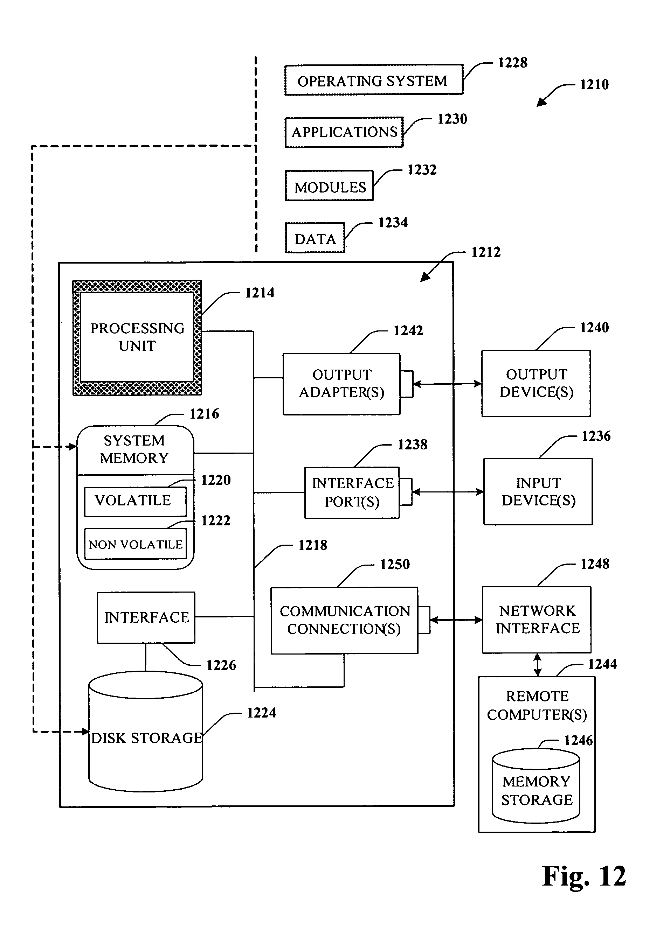

In order to provide a context for the various aspects of the disclosed subject matter, Fig. 12 as well as the following discussion are intended to provide a brief, general description of a suitable environment in which the various aspects of the disclosed subject matter may be implemented. While the subject matter has been described above in the general context of computer-executable instructions of a computer program that runs on a computer and/or computers, those skilled in the art will recognize that the invention also may be implemented in combination with other program modules. Generally, program modules include routines, programs, components, data structures, *etc.* that perform particular tasks and/or implement particular abstract data types. Moreover, those skilled in the art will appreciate that the inventive methods may be practiced with other computer system configurations, including single-processor or multiprocessor computer systems, mini-computing devices, mainframe computers, as well as personal computers, hand-held computing devices (*e.g.*, personal digital assistant (PDA), phone, watch...), microprocessor-based or programmable consumer or industrial electronics, and the like. The illustrated aspects may also be practiced in distributed computing environments where tasks are performed by remote processing devices that are linked through a communications network. However, some, if not all aspects of the invention can be practiced on stand-alone computers. In a distributed computing environment, program modules may be located in both local and remote memory storage devices.

With reference to Fig. 12, an exemplary environment 1210 for implementing various aspects disclosed herein includes a computer 1212 (*e.g.*, desktop, laptop, server, hand held, programmable consumer or industrial electronics...). The computer 1212 includes a processing unit 1214, a system memory 1216, and a system bus 1218. The system bus 1218 couples system components including, but not limited to, the system memory 1216 to the processing unit 1214. The processing unit 1214 can be any of various available microprocessors. Dual microprocessors and other multiprocessor architectures also can be employed as the processing unit 1214.

The system bus 1218 can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1216 includes volatile memory 1220 and nonvolatile memory 1222. The basic input/output system (BIOS), containing the basic routines to transfer information between elements within the computer 1212, such as during start-up, is stored in nonvolatile memory 1222. By way of illustration, and not limitation, nonvolatile memory 1222 can include read only memory (ROM), programmable ROM (PROM), electrically programmable ROM (EPROM), electrically erasable ROM (EEPROM), or flash memory. Volatile memory 1220 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1212 also includes removable/non-removable, volatile/non-volatile computer storage media. Fig. 12 illustrates, for example, disk storage 1224. Disk storage 1224 includes, but is not limited to, devices like a magnetic disk drive, floppy disk drive, tape drive, Jaz drive, Zip drive, LS-100 drive, flash memory card, or memory stick. In addition, disk storage 1224 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1224 to the system bus 1218, a removable or non-removable interface is typically used such as interface 1226.

It is to be appreciated that Fig 12 describes software that acts as an intermediary between users and the basic computer resources described in suitable operating environment 1210. Such software includes an operating system 1228. Operating system 1228, which can be stored on disk storage 1224, acts to control and allocate resources of the computer system 1212. System applications 1230 take advantage of the management of resources by operating system 1228 through program modules 1232 and program data 1234 stored either in system memory 1216 or on disk storage 1224. It is to be appreciated that the present invention can be implemented with various operating systems or combinations of operating systems.

A user enters commands or information into the computer 1212 through input device(s) 1236. Input devices 1236 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1214 through the system bus 1218 *via* interface port(s) 1238. Interface port(s) 1238 include, for example, a serial port, a parallel port, a game port, and a universal serial bus (USB). Output device(s) 1240 use some of the same type of ports as input device(s) 1236. Thus, for example, a USB port may be used to provide input to computer 1212 and to output information from computer 1212 to an output device 1240. Output adapter 1242 is provided to illustrate that there are some output devices 1240 like displays (*e.g.*, flat panel, CRT, LED, LCD...), speakers, and printers, among other output devices 1240 that require special adapters. The output adapters 1242 include, by way of illustration and not limitation, video and sound cards that provide a means of connection between the output device 1240 and the system bus 1218. It should be noted that other devices and/or systems of devices provide both input and output capabilities such as remote computer(s) 1244.

Computer 1212 can operate in a networked environment using logical connections to one or more remote computers, such as remote computer(s) 1244. The remote computer(s) 1244 can be a personal computer, a server, a router, a network PC, a workstation, a microprocessor based appliance, a peer device or other common network node and the like, and typically includes many or all of the elements described relative to computer 1212. For purposes of brevity, only a memory storage device 1246 is illustrated with remote computer(s) 1244. Remote computer(s) 1244 is logically connected to computer 1212 through a network interface 1248 and then physically connected *via* communication connection 1250. Network interface 1248 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit-switching networks like Integrated Services Digital Networks (ISDN) and variations thereon, packet switching networks, and Digital Subscriber Lines (DSL).

Communication connection(s) 1250 refers to the hardware/software employed to connect the network interface 1248 to the bus 1218. While communication connection 1250 is shown for illustrative clarity inside computer 1212, it can also be external to computer 1212. The hardware/software necessary for connection to the network interface 1248 includes, for exemplary purposes only, internal and external technologies such as, modems including regular telephone grade modems, cable modems, power modems and DSL modems, ISDN adapters, and Ethernet cards or components.

What has been described above includes examples of aspects of the claimed subject matter. It is, of course, not possible to describe every conceivable combination of components or methodologies for purposes of describing the claimed subject matter, but one of ordinary skill in the art may recognize that many further combinations and permutations of the disclosed subject matter are possible. Accordingly, the disclosed subject matter is intended to embrace all such alterations, modifications and variations that fall within the spirit and scope of the appended claims. Furthermore, to the extent that the terms "includes," "has," "having" or various forms thereof are used in either the detailed description or the claims, such terms are intended to be inclusive in a manner similar to the term "comprising" as "comprising" is interpreted when employed as a transitional word in a claim.
In summary the invention discloses communications configuration of programmable logic controller modules in an industrial automation environment. Systems and methods are provided that automatically enables a programmable logic controller module to operate on a communications network once communicatively coupled thereto. Other control modules, a personal computer, or the like can access and/or otherwise interact with a module as soon as it coupled to a network. Accordingly, manual module configuration it is not required prior to access and interaction in an industrial control system.

## Claims

1. An industrial control system, comprising:
an industrial automation module; and
a configuration component that automatically configures and announces the presence of the module on a network upon connection to the network.

2. The system of claim 1, the configuration component assigns a unique network address to the module.

3. The system of claim 2, the network address is at least one of an Internet Protocol version 4 (IPv4) address, an Internet Protocol version 6 (IPv6) address, Common Industrial Protocol (CIP) address, an object identifier (OID) and a slot position on a backplane.

4. The system of claim 2 or 3, the configuration component broadcasts the network address on the network.

5. The system of one of claims 1 to 4, the network is at least one of a backplane of a programmable logic controller and a TCP/IP network.

6. The system of one of claims 1 to 5 the configuration component further comprising, a descriptor component that transmits a description of the module on the network.

7. The system of claim 6, the descriptor component responds to a request for information about the module.

8. The system of one of claims 1 to 7 further comprising, a security component that authenticates a device on the network before accepting communication to the module.

9. An industrial control system, comprising:
a first module communicatively coupled to a network, the first module configures itself on the network; and
a second module communicatively coupled to the network, the second module discovers the first module.

10. The system of claim 9 or 10, the first module assigns itself a network address.

11. The system of claim 9, 10 or 11, the second module iterates the network to discover the network connected module.

12. The system of claim 9, the second module requests a description of the first module from the first module.

13. A method for configuring an industrial control system comprising:
receiving an announcement from a network connected module;
discovering a service offered from the network connected module; and
initiating control over the service.

14. The method of claim 13, discovering a service further comprises requesting a detailed description from the network connected module.

15. The method of claim 13 or 14, initiating control further comprises accessing functions of the network connected device.
